Europäisches Patentamt

European Patent Office

Office européen des brevets

(11) Publication number: 0 199 599
A2

# EUROPEAN PATENT APPLICATION

(21) Application number: 86303111.8

(22) Date of filing: 24.04.86

(51) Int. Cl.4: A01M 21/04

(30) Priority: 24.04.85 AU 291/85

(43) Date of publication of application:
29.10.86 Bulletin 86/44

(84) Designated Contracting States:
AT BE CH DE FR GB IT LI LU NL SE

(71) Applicant: U.L.V. PTY. LIMITED.
46 Greenacre Road
South Hurstville New South Wales 2221(AU)

(72) Inventor: Baumber, Kevin Geoffrey
46 Greenacre Road
South Hurstville New South Wales 2221(AU)
Inventor: Baumber, Donald Eric
46 Greenacre Road
South Hurstville New South Wales 2221(AU)

(74) Representative: Jackson, Peter Arthur et al
GILL JENNINGS & EVERY 53-64 Chancery
Lane
London WC2A 1HN(GB)

(54) An applicator.

(57) An applicator 10 to dispense herbicides, said applicator 10 having a supply cavity 17 within which a supply of the herbicide is located, a dispensing cavity 22 from which the herbicide is dispensed to a wick 21 or other dispensing material, and a passage 23 extending between said supply cavity 17 and dispensing cavity 22, which passage 23 provides a resistance to the flow of the herbicide therethrough so as to regulate the flow of said herbicide from said delivery cavity 22.

EP 0 199 599 A2

FIG. 1

## AN APPLICATOR

The present invention relates to applicators and more specifically but not exclusively to applicators especially for applying herbicides to weeds.

The present invention is also an improvement in or alternative construction to the applicator which is the subject of Australian Patent Application 87487/82. However, the present invention in its preferred form, also relates to applicators which can dispense powders or granular material, and which provide for better flow control in respect of the material being delivered by the applicator.

There is firstly disclosed herein an applicator having an applicator head, said applicator head including a supply cavity to receive a supply of material to be dispensed by the applicator, a dispensing cavity from which said material is dispensed by said applicator, and a passage extending from said supply cavity to said dispensing cavity and through which said material passes, and wherein said passage is adapted to provide a resistance of the flow of said material therethrough so as to control the level of said material in said delivery cavity.

Preferred forms of the present invention will now be described by way of example with reference to the accompanying drawings wherein:

Fig.1 is a schematic side elevation of an applicator;

Fig. 2 is a schematic part sectioned side elevation of the applicator of Fig. 1;

Fig. 3 is a schematic sectioned side elevation of a modification of the applicator of Fig. 2;

Fig. 4 is a schematic sectioned side elevation of a modification of the applicator of Fig. 3;

Fig. 5 is a schematic sectioned side elevation of a modification of the applicator of Fig. 4;

Fig. 6 is a schematic sectioned side elevation of a further applicator;

Fig. 7 is a schematic sectioned side elevation of a portion of the applicator of Fig. 6;

Fig. 8 is a schematic sectioned side elevation of a still further applicator;

Fig. 9 is a schematic sectioned side elevation of an applicator to dispense a predetermined volume of a substance to be dispensed;

Fig. 10 is a schematic sectioned side elevation of the applicator of Fig. 9;

Fig. 11 is a schematic sectioned side elevation of a still further applicator adapted to dispense a predetermined volume of a substance;

Fig. 12 is a schematic sectioned side elevation of the applicator of Fig. 11; and

Fig. 13 is a schematic sectioned side elevation of a further applicator adapted to dispense liquid herbicides.

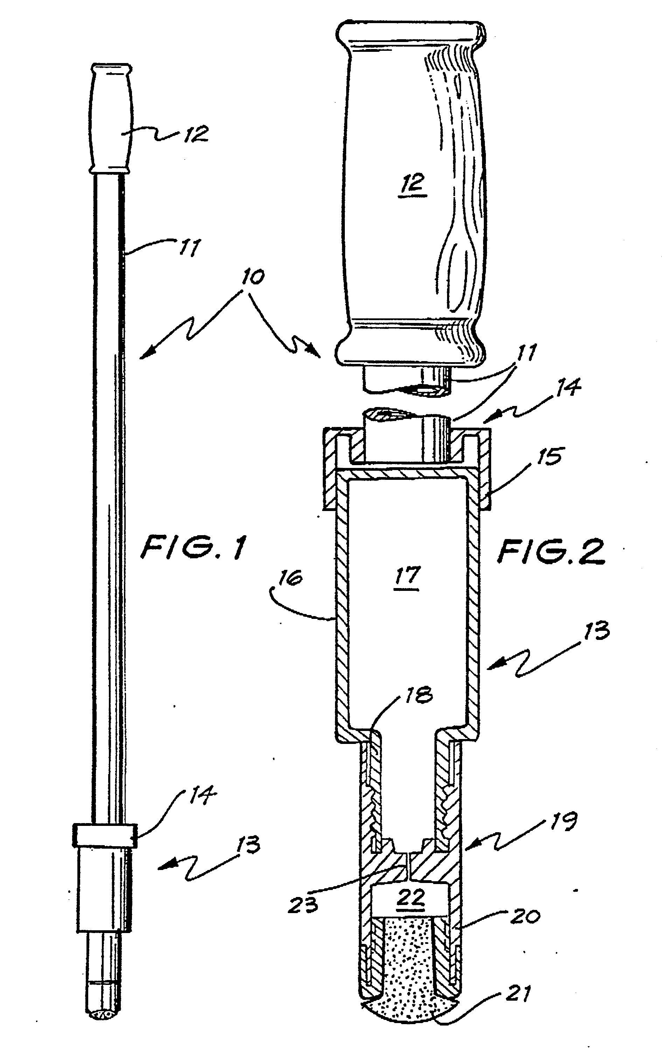

In Figs. 1 and 2 there is schematically depicted an applicator 10 having a handle 11 fitted with a grip 12. The handle is generally elongated and supports at its lower end an applicator head 13. The applicator head 13 includes a socket 14 providing an annular flange 15 which engages a reservoir body 16. The reservoir body 16 encompasses a chamber 17 to receive a supply of the substance to be dispensed by the applicator 10. The reservoir body 16 may be frictionally engaged by the flange 15, or alternatively, the body 16 may threadably co-operate with the flange 16 in order to be secured thereto. The body 16 at its lower end is provided with an annular spigot 18 which is threaded so as to support an applicator member 19. The applicator member 19 has a flange 20 of annular configuration to receive an applicator wick 21. The wick 21 may be formed of a plurality of strands in the true formation of a wick, or alternatively, may be of a porous pad of foam material. The flange 20 and the wick 21 co-operate to define a chamber 22. The chamber 22 communicates with the chamber 17 by means of a passage 23 extending through the applicator member 19. The passage 23 would be of a length and cross-sectional area to co-operate with the substance in the chamber 17 so that the substance is delivered to the chamber 22 in a controlled manner. For example, the passage 23 could co-operate with the viscosity and surface tension of a liquid located in the chamber 17 so that the liquid is only delivered to the chamber 22 when the applicator head 13 is shaken. Alternatively, the passage 23 may co-operate with the surface tension and viscosity of a liquid in the chamber 17 so that the liquid merely drips through the passage 23 to be delivered to the chamber 22. In this particular embodiment, it should be appreciated that gravity would aid in delivering the substance from the chamber 17 to the chamber 22. As a modification, the body 16 may be formed of deformable material enabling a user to apply pressure to the substance within the chamber 17. This would then allow acceleration of the delivery rate from the chamber 17 to the chamber 22.

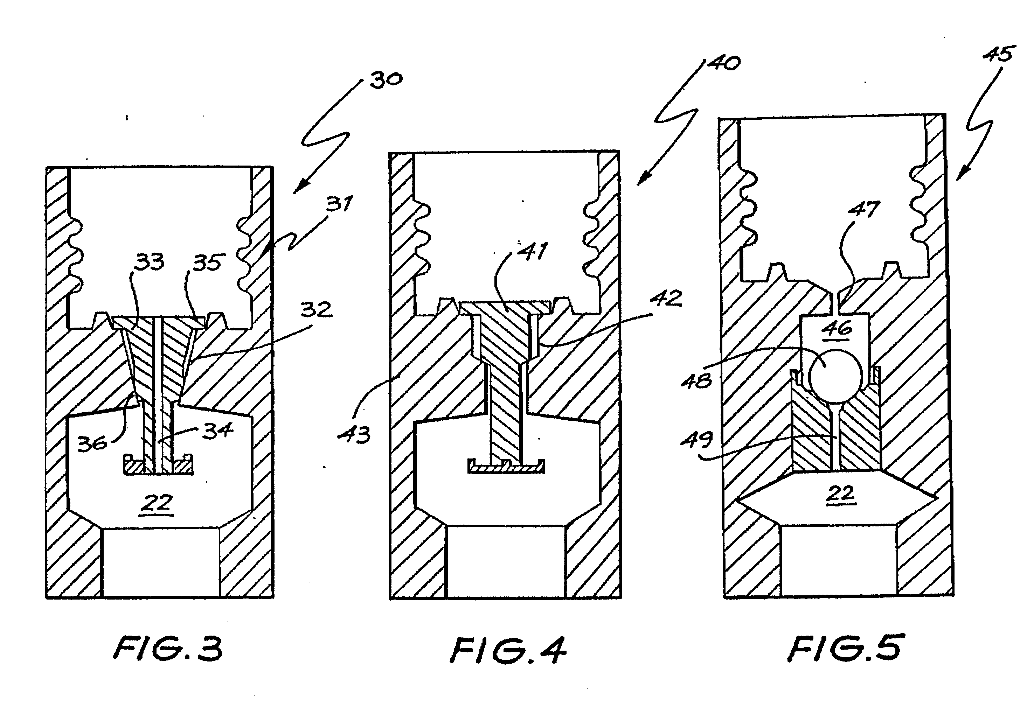

In Fig. 3 there is schematically depicted an alternative dispensing head 30 to the dispensing head 13 of Figs. 1 and 2. In this particular embodiment, the dispensing head 30 has a dispensing body 31 threaded to enable attachment thereof to the spigot 18 of the applicator 10. The body 31 is provided with a frusto-conical passage 32 within which there rests a valve member 33 through which there extends a passage 34. The valve member 33 is provided with an upper flange 35 which abuts a portion of the body 31, and a lower flange 14 which captively locates the valve member 33 within the body 31. Additionally, the valve member 33 has a tapered surface 36 which sealingly engages the frusto-conical surface 32.

In operation of the above-described applicator head 30, a wick or other applicator portion such as a sponge, would normally be supplied with the substance to be applied via the passage 34. However, to allow for increased flow, the valve member 33 is movable relative to the valve body 31 and accordingly, by shaking the applicator body 31, the valve member 33 is caused to move thereby allowing increased flow via the frusto-conical passage 32.

In Fig. 4 there is schematically depicted a modification of the valve member 30 of Fig. 3. In this particular embodiment, the applicator head 40 is provided with a movable valve member 41 not provided with a passage as disclosed in Fig. 3. In this particular embodiment, flow through the passage 42 is governed by movement of the valve member 41 within the body 43. In the position depicted in Fig. 4, the valve member 41 is closing the passage 42. However, upon displacement of this valve member 41 from the position depicted, the liquid to be dispensed is then allowed to flow through the passage 42.

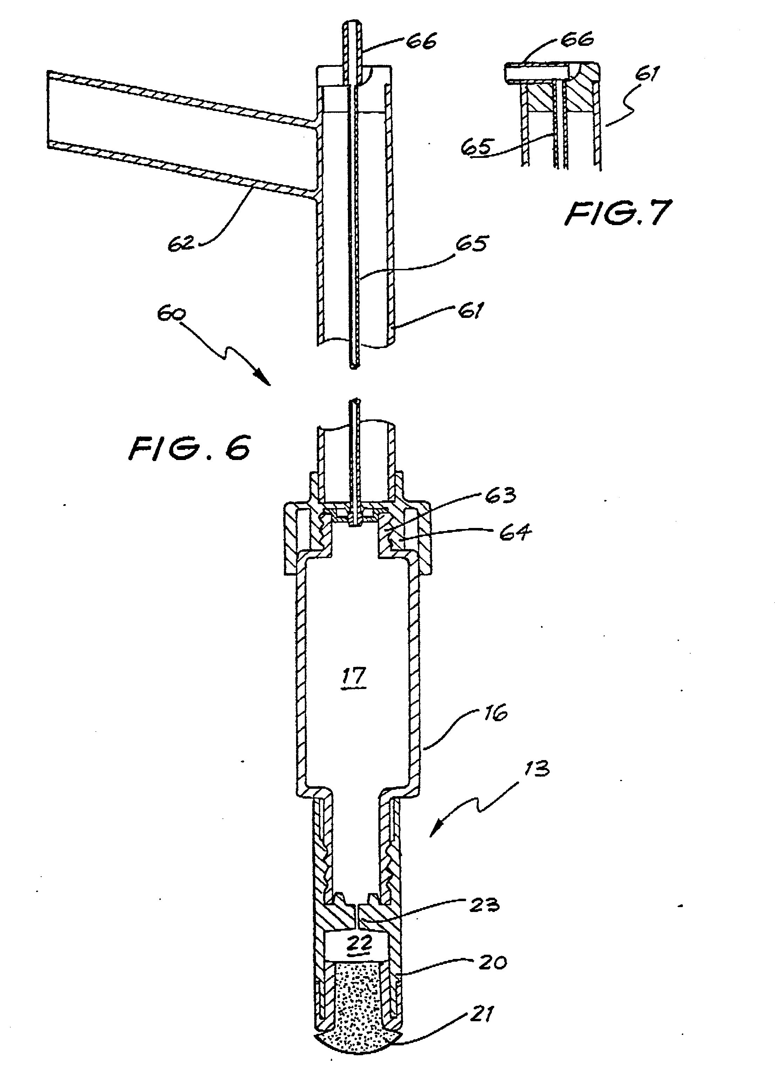

In Fig. 5 the applicator head 45 is provided with an intermediate chamber 46 which receives a liquid to be dispensed via a passage 47. Within the chamber 46 there is located a valve ball 48 which selectively sealingly closes a further passage 49. The passage 49 then extends to the chamber 22. Again, movement of the applicator head 45 causes movement of the ball 48 thereby permitting flow through the passage 49.

In Figs. 6 and 7 there is schematically depicted an applicator 60. The applicator 60 has a stem 61 leading to a handle 62. Secured to the lower end of the stem 61 is the applicator head 13 and valve body 16 described with reference to Figs. 1 and 2. However, in this particular embodiment, the valve body 16 is provided with a threaded flange 63 which engages a threaded flange 64 secured to the stem 61. The upper end of the body 16 is open to enable selective connection thereof to the atmosphere so that the cavity 17 may be provided with atmospheric pressure. Extending through the stem 61 is a tube 65 provided at its upper end with a valve member 66. The valve member 66 is movable from the position depicted in Fig. 6. to the position depicted in Fig. 7. In Fig. 6, the valve member 66 allows atmospheric pressure to be delivered to the chamber 17. While in the position depicted in Fig. 7, the valve member 66 closes the tube 65.

In operation of the above-described applicator 60, the rate of flow of a liquid from the chamber 17 can be governed via manipulation of the valve member 66.

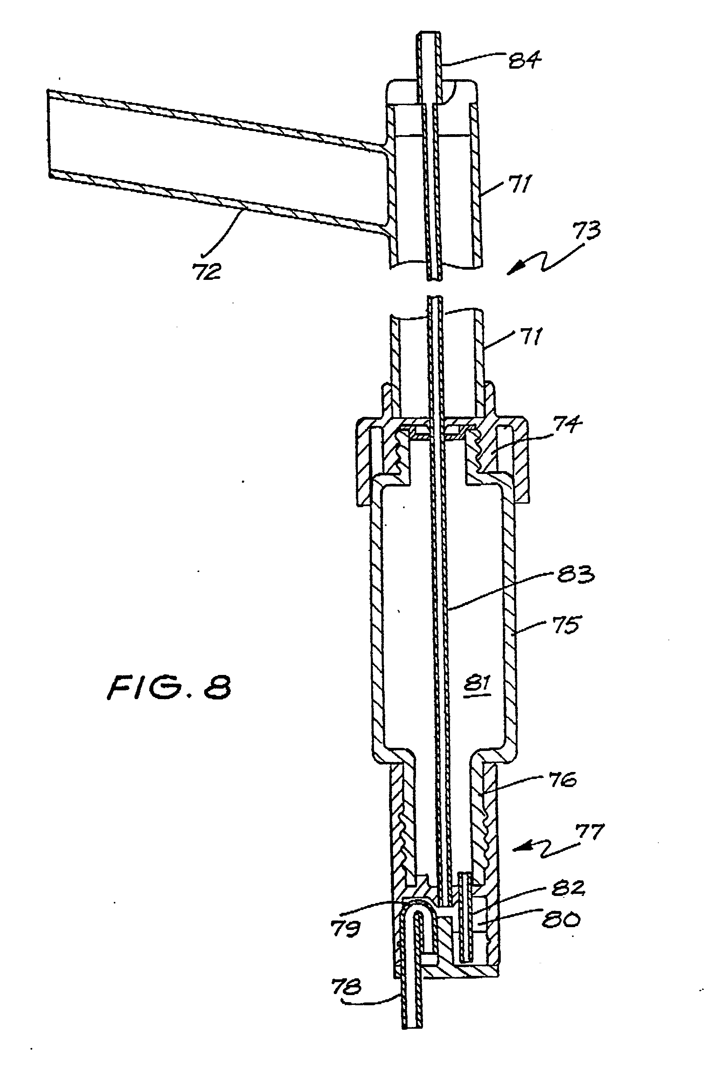

In Fig. 8 there is schematically depicted an applicator 70 having an elongated stem 71 provided at its upper end with a handle 72. The lower end of the stem 71 is provided with a mounting member 73 with a threaded flange 74 threadably engaging a reservoir body 75. The lower end of the body 75 is provided with a threaded flange 76 threadably engaging an applicator head 77. The applicator head 77 is provided with a dispensing tube 78 having a U-shaped upper end 79 terminating in an annular chamber 80. The chamber 80 communicates with the chamber 81, provided by the body 75, via a tube 82 terminating adjacent the lower end of the chamber 80. Also communicating with the chamber 80 is an elongated tube 83 which allows atmospheric pressure to be delivered to the chamber 80 via an operator-manipulated valve member 84. The valve member 84 is movable from the position depicted in Fig. 8 to a position closing the tube 83.

In operation of the above-described applicator 70, the rate at which a liquid is dispensed by the tube 78 may be governed by the operator manipulating the valve member 84 to thereby determine the pressure in the chamber 80.

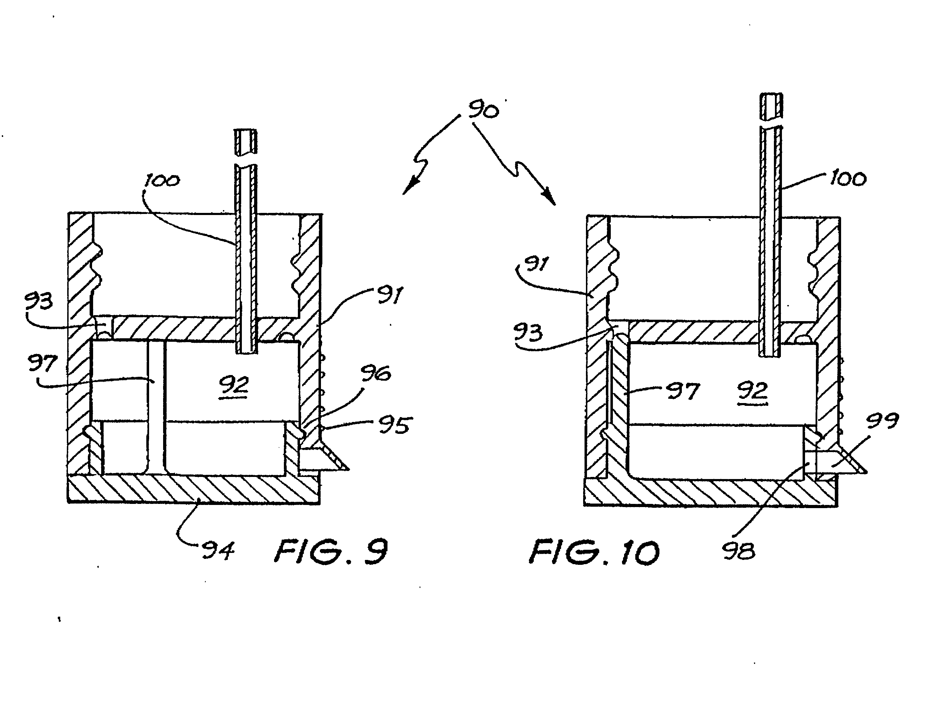

In Figs. 9 and 10 there is schematically depicted an applicator head 90 to dispense a measured volume of a liquid. The applicator head 90 has a body 91 which is threaded so as to be threadably attached to a reservoir. The head 90 has a chamber 92 to which the liquid is delivered, which chamber 92 communicates with the reservoir by means of a passage 93.

The chamber 92 is closed via a cap 94 rotatably retained with the body 91 by means of an annular projection 95 engaging an annular recess 96 formed in the body 91. The cap 94 is also provided with a stem 97 which is locatable so as to close the passage 93. This is best seen in Fig. 10. The cap 94 is also provided with a passage 98 which is selectively alignable with a dispensing passage 99 formed in the body 91. Also communicating with the chamber 92 is a tube 100 which may be selectively closed as required to enable the delivery of liquid to the chamber 92, via opening the chamber 92 to atmosphere.

In operation of the above-described dispensing head 90, a liquid to be dispensed, or alternatively, a powder or other granular material, may be delivered to the chamber 92 by opening the passage 93. When the passage 93 is open, the dispensing passage 99 is closed. The liquid is allowed to be delivered to the chamber 92 upon opening of the tube 100. Once the predetermined quantity of liquid has been delivered to the chamber 92, the cap 94 is rotated closing the passage 93 and aligning the passages 98 and 99 so that the liquid is then dispensed from the head 90.

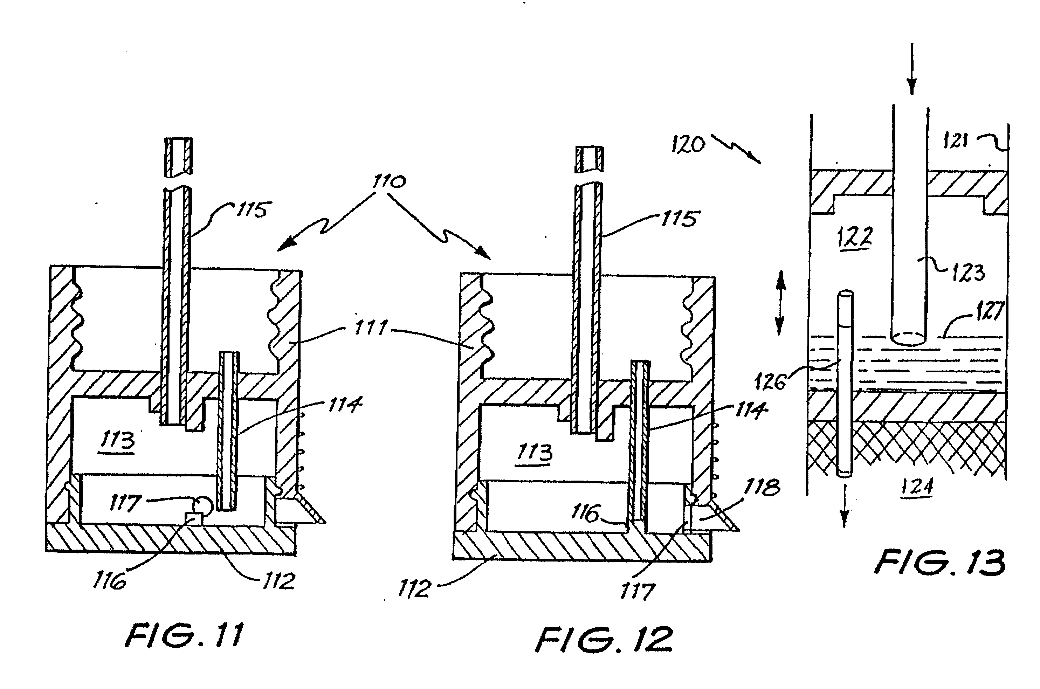

Turning now to Figs. 11 and 12 wherein there is depicted a dispensing head 110. The dispensing head 110 has a body 111 which co-operates with a rotatable cap 112 to define a chamber 113. The body 111 is threaded to enable attachment of the head 110 to a reservoir. The reservoir is allowed to communicate with the chamber 113 via a tube 114. Also communicating with the chamber 113 is a tube 115 which is selectively closable by an operator. The cap 112 is provided with a projection 116 which is positionable to close the tube 114. Additionally, the cap 112 is provided with a passage 117 which is selectively alignable with the passage 118 through which the substance is dispensed.

In operation of the above-described dispensing head 110, a predetermined volume of a substance to be dispensed may be delivered to the chamber 113 via selectively opening the tube 115. Once the desired volume has been delivered to the chamber 113, the tube 115 is closed. However, it should be appreciated that when the tube 115 is open, the cap 112 should be rotated to a position allowing the substance to flow through the tube 114. That is, the projection 116 does not close the lower end of the tube 114. When the tube 114 is open, the passage 117 is not aligned with the dispensing passage 118. Once the desired volume of liquid is delivered to the chamber 113, the tube 115 is then closed. The cap 112 is then rotated closing the tube 114 and aligning the passages 117 and 118.

In Fig. 13 there is schematically depicted an applicator 120 particularly designed to dispense very free-flowing liquids, such as a herbicide formulation commonly known as Dicamba mixtures. The applicator 120 includes a body 121 providing a delivery reservoir 122 communicating with a main reservoir (not depicted) via a conduit 123. Mounted on the body 121 is a wick 124 which receives the herbicides 125 from the reservoir 122 via a capillary tube 126 which terminates toward the upper end of the reservoir 122. The level 127 of the herbicide 125 is determined by the pressure within the reservoir 122. The size of the capillary tube 126 is used to control the rate of the delivery of the herbicide 125 to the wick 124. By inserting such a capillary tube 126 a very positive cut-off will occur when pressure on the upper reservoir is reduced and the liquid falls back to an equalising pressure level between the conduit 125 and the capillary tube 126.

**Claims**

1. An applicator 10 having an applicator head 13, said applicator head 13 including a supply cavity 17 to receive a supply of material to be dispensed by the applicator, a dispensing cavity 22 from which said material is dispensed by said applicator 10, and a passage 23 extending from said supply cavity 17 to said dispensing cavity 22 and through which said material passes, and wherein said passage 23 is adapted to provide a resistance of the flow of said material therethrough so as to control the level of said material in said delivery cavity 22.

2. The applicator 30 of claim 1 further including a movable valve member 33 located within said passage 32 and movable between a first position sealingly closing said passage 32 and a second position allowing communication between said supply cavity 17 and delivery cavity 22.

3. The applicator 30 of claim 2 further including a further passage 34 extending through said valve member 33 allowing communication between said supply cavity 17 and said delivery cavity 22.

4. The applicator 30 of claim 2 wherein said movable valve member has a tapering surface 36 positioned to sealingly engage a frusto-conical surface 32 defining said passage.

5. The applicator 45 of claim 1 further including a movable valve member 48 biassed to close said passage 49 and movable to allow communication via said passage 49 between said supply cavity 17 and said delivery cavity 22, with said movable valve member 48 being located within a valve cavity 46 located upstream of said passage 49.

6. The applicator 45 of claim 5 wherein said movable valve member 48 is a spherical element 48 and said valve cavity 48 communicates with said supply cavity 17 via a further passage 47.

7. The applicator 70 of claim 1 further including operator-manipulable valve means to selectively deliver atmospheric pressure to said supply cavity.

8. The applicator of claim 1 further including operator-manipulable valve means 66 to selectively deliver atmospheric pressure to said delivery cavity 22.

9. The applicator 70 of claim 8 wherein said passage 23 is provided via a tube 85 terminating at one end in said supply cavity 81 and terminating at the other end in said delivery cavity 80.

10. The applicator 70 of claim 9 further including a dispensing tube 78 extending from said delivery cavity 80.

11. The applicator 90 of claim 1 further including valve means 97 movable by the operator between, a first position closing said passage 95, and a second position allowing communication between said supply cavity and said delivery cavity 92, and further passage means 100 to selectively allow the delivery of atmospheric pressure to said dispensing cavity 92.

12. The applicator 110 of claim 11 wherein said passage is provided by a tube 115 extending from said supply cavity and terminating within said dispensing cavity 113.

13. The applicator 120 of claim 1 further including a delivery tube 126 extending from said delivery cavity 122, which delivery tube 126 provides a capillary passage to regulate the delivery of said material from said delivery cavity 122.

FIG.1

FIG.2

FIG.3　　　　FIG.4　　　　FIG.5

0 199 599

0 199 599

FIG.7

FIG.6

FIG. 8

FIG. 9

FIG. 10

0 199 599

FIG. 11

FIG. 12

FIG. 13

0 199 599